# EUROPÄISCHE PATENTSCHRIFT

(11) **EP 2 759 361 B1**
(45) Veröffentlichungstag und Bekanntmachung des Hinweises auf die Patenterteilung: **27.01.2016**
(21) Anmeldenummer: 14152858.8
(22) Anmeldetag: 28.01.2014
(51) Int. Cl.: B23B 31/16, B23B 31/10

(54) **Spann- oder Greifeinrichtung sowie Grundbacke zur Verwendung in einer Spann- oder Greifeinrichtung**
Clamping or gripping assembly, and base jaw for use in a clamping or gripping assembly
Dispositif de serrage ou de préhension et mors de base destiné à être utilisé dans un dispositif de serrage ou de préhension

(30) Priorität: 28.01.2013 DE 102013001355
(43) Veröffentlichungstag der Anmeldung: 30.07.2014
(73) Patentinhaber: Schunk GmbH & Co. KG Spann- und Greiftechnik, 74348 Lauffen (DE)
(72) Erfinder: Damang, Markus, 72458 Albstadt (DE); Schober, Benjamin, 88605 Sauldorf-Rast (DE); Koch, Alexander, 88512 Mengen (DE)
(74) Vertreter: Albrecht, Ralf

(56) Entgegenhaltungen:
- EP-A1- 1 332 817
- CH-A- 87 072
- US-A- 3 023 016

## Beschreibung

Die vorliegende Erfindung betrifft eine Spann- oder Greifeinrichtung nach dem Oberbegriff von Anspruch 1.

Spann- oder Greifeinrichtungen dieser Art sind in unterschiedlichen Ausführungsformen bekannt. In der Automationstechnik werden sie an Greifereinrichtungen eingesetzt, um Bauteile zu fixieren. In der Spanntechnik finden sie beispielsweise als Spannfutter für Werkzeugmaschinen, insbesondere Drehmaschinen Verwendung, um die zu bearbeitenden Werkstücke zu spannen. Des Weiteren werden sie an Fräsmaschinen oder kombinierten Dreh/Fräs-Bearbeitungszentren eingesetzt, um ein zu bearbeitendes Bauteil an einem Maschinentisch zu fixieren.

Die herkömmlichen Spanneinrichtungen bzw. Spannfutter besitzen dabei einen formsteifen Grundkörper, der eine zentrale Aufnahme aufweist, sowie mehrere Spannbacken, die in radialen Führungsnuten in der vorderen Stirnfläche des Grundkörpers verschiebbar angeordnet und über entsprechende Antriebsmittel gemeinsam verstellbar sind. Die bekannten Spanneinrichtungen haben sich in der Praxis durchaus bewährt. Gerade bei Fräsmaschinen oder bei kombinierten Dreh/Fräs-Bearbeitungszentren besteht jedoch die Problematik, dass die maximale Tragkraft des Maschinentisches begrenzt ist, so dass auch das Gewicht und damit die Größe der Bauteile, welche bearbeitet werden können, beschränkt ist. Vor diesem Hintergrund gehen die Bestrebungen dahin, das Gewicht der eingesetzten Spanneinrichtungen zu re-duzieren, um insofern die mögliche Tischzuladung durch das zu bearbeitende Bauteil zu erhöhen. In gleicher Weise ist gewünscht, auch die räumlichen Abmessungen der Spanneinrichtungen zu reduzieren, damit mehr Platz für das zu bearbeitende Bauteil zur Verfügung steht.

Ein Spannfutter der eingangs genannten Art ist aus der CH 87072 A bekannt. Dieses umfasst einen Grundkörper, der eine Spannachse definiert. Der Grundkörper besitzt ein im Wesentlichen zylindrisches Basiselement und mehrere außenseitig von dem Basiselement radial abragende Führungselemente. In dem Grundkörper sind mehrere Führungsnuten zur Aufnahme von Spannbacken definiert, wobei jeweils ein innerer Führungsnutenabschnitten in dem Basis Element und ein äußerer Führungsnutabschnitt in den Führungselementen ausgebildet sind.

Vor diesem Hintergrund liegt nun der vorliegenden Erfindung die Aufgabe zugrunde, eine Spann- oder Greifeinrichtung der eingangs genannten Art so auszugestalten, dass sie ein vergleichsweise geringes Gewicht bei ebenfalls vergleichbar geringer Baugröße besitzt.

Diese Aufgabe ist erfindungsgemäß bei einer Spann- oder Greifeinrichtung der eingangs genannten Art durch die kennzeichnenden Merkmale von Anspruch 1 gelöst.

Der Erfindung liegt somit die Idee zugrunde, die Masse von Spanneinrichtungen, welche nach der Art von Mehr-Backen-Spannfutter ausgebildet sind, zu reduzieren, indem diejenigen Segmente des Grundkörpers, welche zwischen den Führungsnuten liegen, zumindest teilweise entfernt werden. Dazu ist der Grundkörper unterteilt in ein Basiselement, dessen Aufgabe darin besteht, die Antriebsmittel für die Spannbacken aufzunehmen und in welchem entsprechend auch nur die innenliegenden Endabschnitte der Führungsnuten ausgebildet sind, und die außenseitig von dem Basiselement positionierten Führungselemente, denen im Wesentlichen die Funktion der Führung der Spannbacken zukommt und in denen entsprechend die längeren, äußeren Führungsnutabschnitte der Führungsnuten ausgebildet sind. Da den Führungselementen lediglich die Funktion zukommt, die Spannbacken zu führen, können sie relativ schmal ausgebildet sein. Nach unten hin ist ihre Breite lediglich durch die vorgeschriebene Breite der Führungsnut begrenzt. Die zwischen den Führungselementen liegende Bereiche bleiben erfindungsgemäß frei, so dass die erfindungsgemäßen Spann- oder Greifeinrichtungen im Vergleich zu den bekannten Spanneinrichtungen, bei denen die Führungsnuten über ihre gesamte Länge in einem vollzylindrischen Grundkörper untergebracht sind, ein deutlich geringeres Gewicht sowie eine reduzierte Baugröße besitzen. Im Ergebnis ist in einem Dreh/Fräs-Bearbeitungs- zentrum die mögliche Tischzuladung durch das zu bearbeitende Bauteil erhöht. Ferner steht für das zu bearbeitende Bauteil mehr Platz zur Verfügung.

Erfindungsgemäß sind die die Führungselemente getrennt von dem Basiselement vorgesehen. Dabei können sie insbesondere mit radialem Abstand von dem Basiselement angeordnet werden. Die getrennte Ausbildung der Führungselemente hat den Vorteil, dass an die Größe des zu spannenden Bauteils angepasst unterschiedlich lange Führungselemente eingesetzt werden können. Unabhängig davon ist es natürlich möglich, mehrere Führungselemente in radialer Richtung aneinander zu reihen, so dass sich deren Führungsnutabschnitte zu einer langen Führungsbahn ergänzen. Entsprechend können auch Führungselemente außenseitig an die Führungselemente angesetzt werden, welche fest mit dem Basiselement verbunden sind, um die Länge der Führungsnuten, zu vergrößern. Die getrennt von den Führungselementen ausgebildeten Basiselemente können blockförmig ausgebildet und insbesondere radial zu dem Basiselement ausgerichtet sein.

Bei der getrennten Ausbildung von Basiselement einerseits und Führungselementen andererseits kann als Basiselement ein übliches Spannfutter eingesetzt werden, das dann einen im Vergleich zur Größe eines zu spannenden Bauteils deutlich verkleinerten Spanndurchmesser besitzt. Die Größe des dann als Basiselement verwendeten Spannfutters ist nicht durch die Größe des zu spannenden Bauteils bestimmt, da der Spanndurchmesser an das Basiselement außen angesetzten Führungselementen vorgegeben wird. Vielmehr kann das Basiselement klein gebaut werden. Die Baugröße muss lediglich ausreichend sein, um die Antriebsmittel, welche zur Aufbringung einer vorgegebenen Spannkraft ausreichen müssen, aufzunehmen. In der Praxis hat sich gezeigt, dass im Einsatz von Bearbeitungszentren als Basis-element Spannfutter eingesetzt werden können, die einen Spanndurchmesser < 400 mm, insbesondere im Bereich zwischen 250 und 350 mm besitzen.

Vorzugsweise ist vorgesehen, dass das Basiselement und die Führungselemente an einer gemeinsamen Halteplatte angeordnet sind, um so eine vormontierte Anordnung zu schaffen, die als bauliche Einheit an einem Maschinentisch montiert oder demontiert werden kann. Dabei können die Führungselemente und das Basiselement an der Halteplatte lösbar fixiert sein. Auch ist es möglich, die Halteplatte unmittelbar an dem Basiselement auszubilden, so dass die Halteplatte mit dem Basiselement eine bauliche Einheit bildet.

Vorzugsweise ist vorgesehen, dass in dem Basiselement die Antriebsmittel vorgesehen sind, die mit den in die Führungsnuten einzusetzenden oder eingesetzten Spannbacken gekoppelt oder koppelbar sind, um diese gemeinsam radial zu verstellen. In an sich bekannter Weise können die Antriebsmittel einen axial in dem Basiselement geführten Spannkolben aufweisen, wobei die in die Führungsnuten eingesetzten Spannbacken mit dem Spannkolben dann in der Weise gekoppelt oder koppelbar sind, dass eine Axialbewegung des Spannkolbens in eine Radialbewegung der Spannbacken umgesetzt wird. Entsprechende Keilhaken/Keilnuten-Mechanismen sind in unterschiedlichen Ausführungsformen bekannt. Andere fachbetätigte Antriebsmittel können jedoch ebenso vorgesehen sein. Gleichfalls ist es möglich, die Spanneinrichtung handbetätigt auszuführen, wobei die Antriebsmittel dann entsprechend ausgebildet sind.

Vorzugsweise besitzen die Spannbacken jeweils eine Grundbacke, die in ihrer Längsrichtung unterteilt sind und ein innenliegendes Grundbackenelement, welches Kopplungsmittel zur Verbindung mit der Antriebseinrichtung trägt, und ein radial außen liegendes Grundbackenelement aufweist, wobei die beiden Grundbackenelemente unbeweglich, aber lösbar miteinander verbunden sind. Bei dieser Ausgestaltung können lange Grundbacken hergestellt werden, indem mehrere Grundbackenelemente aneinandergereiht und miteinander verbunden werden. Diese Ausgestaltung hat den Vorteil, dass die einzelnen Grundbackenelemente relativ kurz ausgebildet und damit leicht hergestellt werden können. Es können jeweils an den Bedarfsfall angepasst auf einfache Weise Grundbackenelemente unterschiedlicher Länge vor Ort montiert werden. Wesentlich ist, dass die Grundbackenelemente jeweils exakt zueinander positioniert und so miteinander verbunden sind, so dass sie im montierten Zustand eine feste Baueinheit bilden. Auf diese Weise kann auf die Herstellung von langen Grundbacken verzichtet werden. Diese sind schwierig zu produzieren, zum Beispiel entsteht bei der Wärmebehandlung ein Verzug der langen und dünnen Grundbacken, der durch eine Nachbearbeitung nur schwer oder gar nicht ausgeglichen werden kann, ohne die Härteschicht vollständig wieder abzutragen.

Die Grundbackenelemente weisen hierzu zweckmäßigerweise an ihren zueinander weisenden Endbereichen Verbindungsabschnitte auf, die miteinander verspannt, insbesondere verschraubt sind. In bevorzugter Weise ist vorgesehen, dass sich die Verbindungsabschnitte in der Längsrichtung der Grundbacke überlappen. Dabei können die sich überlappenden Verbindungsabschnitte an ihren zueinander weisenden Seiten miteinander in Eingriff bringbare Positioniermittel, insbesondere Spitzverzahnungen aufweisen, über welche die Grundbackenelemente in der Axialrichtung der Grundbacke zueinander positionierbar sind. Ferner sind zweckmäßigerweise in den Verbindungsabschnitten Durchgangsöffnungen vorgesehen, durch welche Befestigungsschrauben gesteckt werden können, um die Grundkörperelemente miteinander zu verschrauben und so zu verspannen. Alternativ können in dem einen Verbindungsabschnitt Durchgangsöffnungen und in dem anderen Verbindungsabschnitt Gewindebohrungen vorgesehen sein.

Hinsichtlich weiterer Ausgestaltungen und Vorteile der Erfindung wird auf die nachfolgende Beschreibung von Ausführungsbeispielen unter Bezugnahme auf die beiliegende Zeichnung verwiesen. In der Zeichnung zeigt:
- Figur 1: eine als Spannfutter ausgebildete Spann- oder Greifeinrichtung in perspektivischer Ansicht,
- Figur 2: das Spannfutter aus Figur 1 in Draufsicht,
- Figur 3: eine Ausführungsform einer als Spannfutter ausgebildeten Spann- oder Greifeinrichtung gemäß der vorliegenden Erfindung in perspektivischer Ansicht,
- Figur 4: die Spanneinrichtung aus Figur 3 in Draufsicht,
- Figur 5: in perspektivischer Ansicht die Spanneinrichtung aus Figur 3 an einer Halteplatte montiert,
- Figur 6: die Spanneinrichtung aus Figur 5 in Draufsicht,
- Figur 7: die Spanneinrichtung aus Figur 3 an einem Maschinentisch eines kombinierten Fräs-Dreh-Bearbeitungszentrums montiert, wobei nur das Basiselement ohne die Führungselemente des Grundkörpers eingesetzt werden,
- Figur 8: die Spanneinrichtung aus Figur 7, wobei zusätzlich zu dem Basiselement auch die Führungselement des Grundkörpers eingesetzt werden, und
- Figur 9: einen Ausschnitt einer Grundbacke gemäß der vorliegenden Erfindung mit zwei verbindbaren Grundbackenelementen.

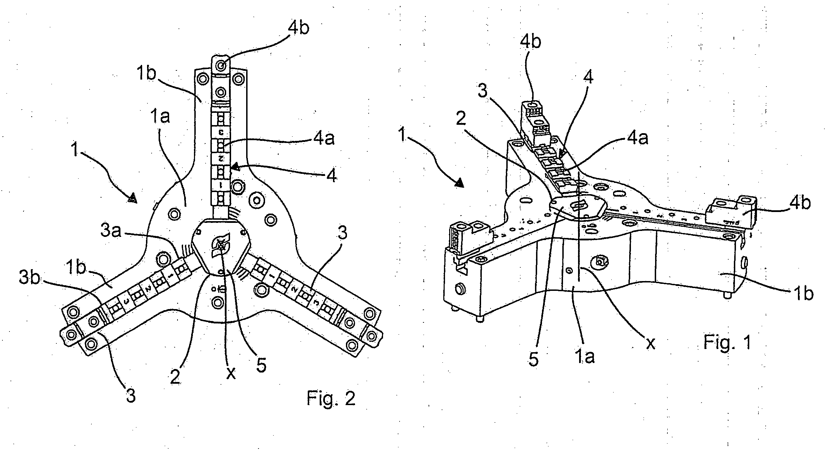

In den Figuren 1 und 2 ist ein Beispiel einer nicht erfinderischen Spann- und/oder Greifeinrichtung dargestellt, die hier in Form eines üblichen 3-Backen-Spannfutters ausgebildet ist.

Zu dem Spannfutter gehört ein Grund- oder Futterkörper 1 aus einem formsteifen Material. Dieser umfasst ein zentrales Basiselement 1a zylindrischer Grundform, in welchem eine zentrale Aufnahmebohrung 2 ausgebildet ist, welche eine Spannachse X definiert, und insgesamt drei Führungselemente 1b, welche radial von dem Basiselement 1a abragen, und gleichmäßig über den Umfang des Basiselements, d.h. mit jeweils 120° Versatz gegen einander, an diesem positioniert sind. In der vorderen Stirnfläche des Grundkörpers 1 sind drei ebenfalls mit jeweils 120° Versatz gegeneinander versetzt angeordnete Führungsnuten 3 vorgesehen, die radial zu der Spannachse X verlaufen, wobei jeweils ein innerer Führungsnutabschnitt 3a der Führungsnuten 3 in dem Basiselement 1a und ein äußerer, längerer Führungsnutabschnitt 3b der Führungsnuten 3 in den Führungselementen 3b ausgebildet ist. Die außerhalb des Basiselements 1a und in Umfangsrichtung zwischen den Führungselementen 1 b liegenden Bereiche sind freigelassen, so dass sich eine sternartige Anordnung ergibt. In die Führungsnuten 3 sind Spannbacken 4 eingesetzt, die jeweils aus einer in eine Führungsnut 3 eingesetzten Grundbacke 4a und einer daran angeschraubten Aufsatzbacke 4b bestehen. Es ist natürlich nicht zwingend erforderlich, die Spann- und/oder Greifeinrichtung als Drei-Spacken-Spannfutter in der vorbeschriebenen Weise auszubilden. Eine Ausgestaltung als beliebiges Mehr-Backen-Spannfutter mit 2, 4, 5 oder auch mehr Spannbacken ist ebenso möglich.

Zur gemeinsamen Verstellung der Spannbacken 4 in den Führungsnuten 3 sind Antriebsmittel vorgesehen. Vorliegend ist die Spanneinrichtung als Kraftspannfutter ausgebildet. Entsprechend fassen die Antriebsmittel einen Kolben 5, der in der zentralen Aufnahmebohrung 2 des Basiselements 1a axial bewegbar geführt und gegen ein Verdrehen gesichert ist. In an sich bekannter und nicht näher dargestellter Weise sind die Grundbacken 4a der Spannbacken 4 an ihrem radial innenliegenden Endbereich mit dem Kolben 5 in der Weise gekoppelt, dass eine Axialbewegung des Kolbens 5 in eine gemeinsame radiale Stellbewegung der Spannbacken 4 umgesetzt wird. Beispielsweise können die Gründbacken 4a an ihrem radial nach innen gerichteten Endbereich einen Keilhaken tragen, der in eine korrespondierende Keilnut des Kolbens 5 eingreift. Konkret wird der Kolben 5 in der Zeichnung nach unten gezogen, um die Spannbacken 4 radial nach innen zu verstellen, und nach oben gedrückt, wenn die Spannbacken 4 nach außen verstellt werden sollen. Alternativ ist es möglich, die erfindungsgemäße Spanneinrichtung handbetätigt auszuführen. Die Antriebsmittel sind dann ebenfalls in an sich bekannter Weise entsprechend ausgebildet.

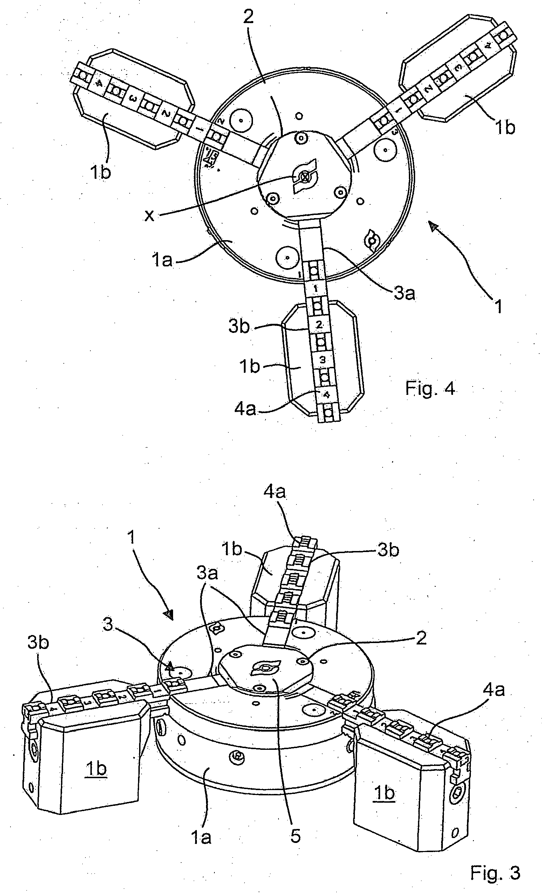

In den Figuren 3 und 4 ist eine zweite Ausführungsform einer erfindungsgemäßen Spann- und/oder Greifeinrichtung gemäß der vorliegenden Erfindung vorgesehen, die - wie die zuvor beschriebene Ausführungsform - als 3-Backen-Spannfutter ausgebildet ist. Bei dieser Ausführungsform besteht der Grundkörper 1 aus mehreren Bauteilen, nämlich einem Basiselement 1a zylindrischer Grundform, in welchem eine zentrale Aufnahmebohrung 2 ausgebildet ist, und insgesamt drei Führungselementen 1b, die gleichmäßig entlang des Umfangs des Basiselements 1a verteilt und außenseitig von dessen angeordnet sind. Im Gegensatz zu der beschriebenen ersten Ausführungsform sind die Führungselemente 1b jedoch als separate Bauteile ausgebildet, welche mit radialem Abstand von dem Basiselement 1a positioniert sind. Die radialen Führungsnuten 3 für die Spannbacken 4 sind hier in der vorderen Stirnfläche sowohl des Basiselements 1 a, als auch der Führungselemente 1 b ausgebildet, wobei in der vorderen Stirnfläche des Basiselements 1a ein relativ kurzer, innenliegender Führungsnutabschnitt 3a und in den Führungselementen 1b jeweils ein längerer, hier etwa doppelt so langer äußerer Führungsnutabschnitt 3b der Führungsnuten 3 vorgesehen ist. In die Führungsnuten 3 ist jeweils die Grundbacke 4a einer Spannbacke 4 eingesetzt, und die Grundbacken 4a sind in bereits beschriebener Weise an ihrem radial innenliegenden Ende mit einem Kolben 5 eines Stellantriebs verbunden, welcher in der zentralen Bohrung 2 des Basiselements 1a axial bewegbar geführt ist, und zwar in der Weise, dass eine Axialbewegung des Kolbens 5 in eine Radialbewegung der Grundbacken 4a umgesetzt wird.

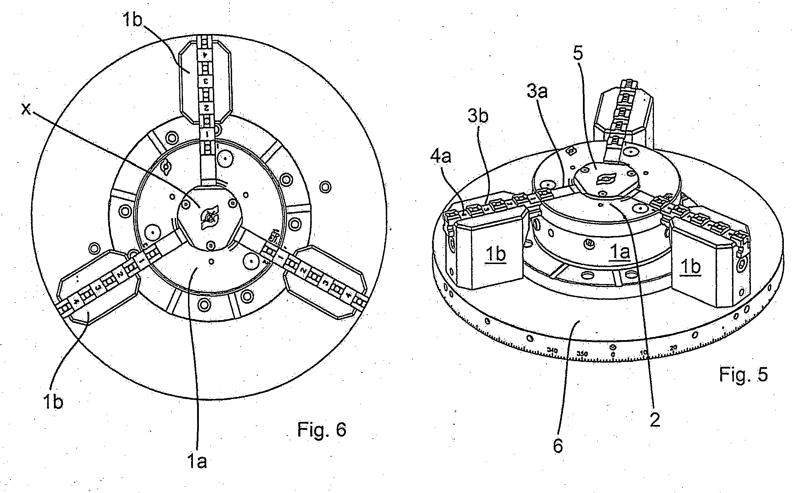

Wie in den Figuren 5 und 6 dargestellt ist, kann die so gebildete mehrteilige Spanneinrichtung an einer gemeinsamen Platte 6 montiert werden, um so ein Spannmodul zu bilden, welches als Ganzes an dem Maschinentisch T eines Bearbeitungszentrums montiert werden kann.

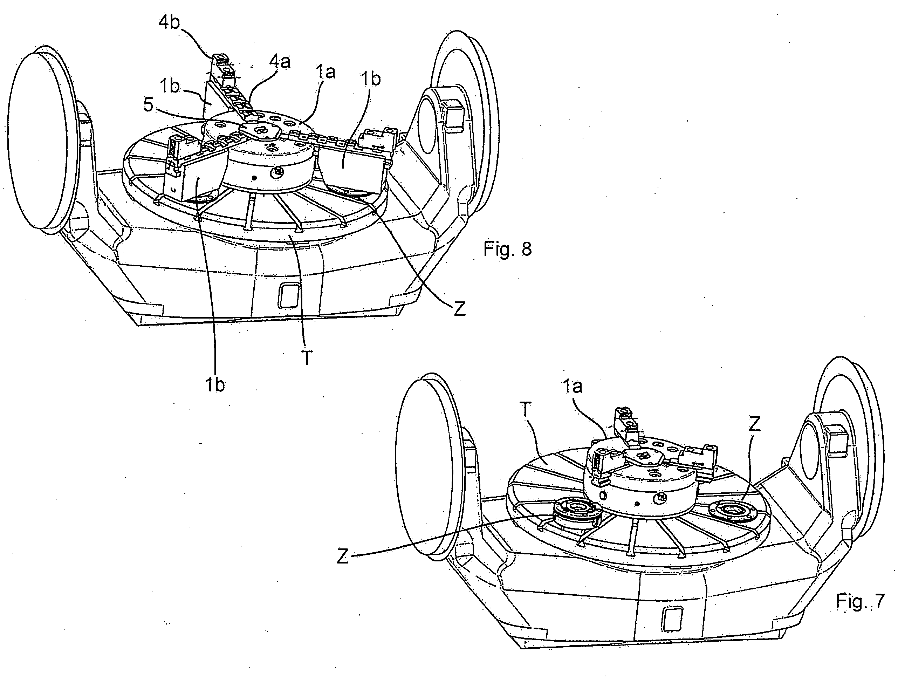

Alternativ ist es möglich, das Basiselement 1a und die Führungselemente 1b über ein sogenanntes Nullpunkt-Spannsystem an dem Arbeitstisch T eines Bearbeitungszentrums zu montieren, wie dies in den Figuren 7 und 8 angedeutet ist. Solche Nullpunkt-Spannsysteme sind in der Praxis bekannt und umfassen jeweils einen Spannzylinder Z, welcher an dem einen Bauteil - hier dem Maschinentisch - in definierter Lage montiert wird, und einen sogenannten Spann- oder Einzugsbolzen, welcher an dem anderen Bauteil - hier den Bauteilen 1a, 1b des Grundkörpers 1 - in definierter Lage fixiert ist. Wenn der Einzugsbolzen in eine zentrale Aufnahme des Spannzylinders Z eingeschoben wird, wird er darin zentriert gespannt, so dass das Bauteil 1a, 1b an dem Arbeitstisch T eine definierte Lage einnimmt.

In der Figur 7 ist das Basiselement 1a des Grundkörpers 1 an dem Arbeitstisch T montiert. In die Führungsnutabschnitte 3a des Basiselements 1a sind in kurze Standard-Spannbacken 4 eingesetzt, so dass relativ kleine Bauteile gespannt werden können. In der Figur 7 fehlen die Führungselemente 1b, es sind jedoch die Spannzylinder Z des Nullpunkt-Spannsystems erkennbar, über welche die Führungselemente 1 b an dem Maschinentisch T gespannt werden können. Entsprechend sind in nicht dargestellter Weise an der Unterseite der Führungselemente 1b zu den Spannzylindern Z korrespondierende Einzugsbolzen vorgesehen.

In Figur 8 ist die Anordnung aus Figur 7 mit montierten Führungselementen 1b gezeigt. Hier kommen Spannbacken 4 mit langen Grundbacken 4a zum Einsatz, die sowohl in den Führungsnutabschnitten 3a des Basiselements 1 b, als auch in den Führungsnutabschnitten 3b geführt sind und an ihrer Oberseite eine Aufsatzbacke 4b tragen.

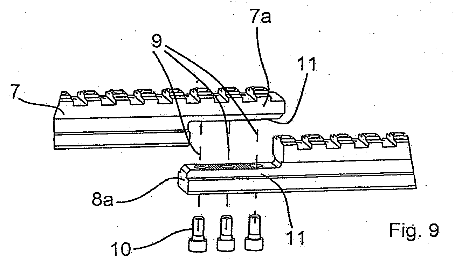

In der Figur 9 ist schließlich ausschnittsweise eine lange Grundbacke 4a dargestellt. Diese ist hier in ihrer Längsrichtung unterteilt in mehrere einzelne Grundbackenelemente, von denen hier nur zwei Grundbackenelemente 7, 8 gezeigt sind, und die an ihren zueinanderweisenden Endbereich miteinander unter Bildung einer Grundbacke 4a verbunden werden können. Hierzu weisen die beiden Grundbackenelemente 7, 8 an ihren zueinanderweisenden Endbereichen Verbindungsabschnitte 7a, 8a auf, die flach ausgebildet sind, so dass sie in Überlappung gebracht werden können, ohne dass sich die Gesamthöhe der Grundbacke 4 ändert. Konkret erstreckt sich der Verbindungsabschnitt 7a des einen Grundkörperelements 7 im Bereich der oberen Grundbackenhälfte und der Verbindungsabschnitt 8a des anderen Grundbackenelements 8 über die untere Grundbackenhälfte. Dabei weisen die Verbindungsabschnitte 7a, 8a an ihren zueinander weisenden Seiten Spitzverzahnungen 11 auf, über welche die Grundbackenelemente 7, 8 in der Axialrichtung der Grundbacke 4a zueinander positionierbar sind. Ferner sind in dem unten liegenden Verbindungsabschnitt 8a Durchgangsöffnungen 9 vorgesehen, durch welche Befestigungsschrauben 10 gesteckt und in korrespondierende Gewindebohrungen des oberen Verbindungsabschnitts eingeschraubt werden können, um die Grundbackenelemente 7, 8 miteinander zu verspannen. Durch eine Aneinanderreihung von Grundbackenelementen 7, 8 lassen sich lange Grundbacken 4a auf einfache Weise je nach Bedarf herstellen.

## Patentansprüche

1. Spann- oder Greifeinrichtung mit einem Grundkörper, der eine Spannachse definiert, und mehreren Führungsnuten (3) zur Aufnahme von Spannbacken, die in einer vorderen Stirnfläche des Grundkörpers (1) ausgebildet sind und radial zu der Spannachse (X) verlaufen, wobei der Grundkörper (1) ein Basiselement (1a), in welchem jeweils ein innerer Führungsnutabschnitt (3b) der Führungsnuten (3) ausgebildet ist, und mehrere außenseitig von dem Basiselement (1a) angeordnete Führungselemente (1 b), in denen jeweils ein äußerer Führungsnutabschnitt (3b) der Führungsnuten (3) ausgebildet ist, aufweist, **dadurch gekennzeichnet, dass** die Führungselemente (1 b) getrennt von dem Basiselement (1a) ausgebildet und insbesondere mit radialem Abstand von dem Basiselement (1a) angeordnet sind.

2. Spann- oder Greifeinrichtung nach Anspruch 1, **dadurch gekennzeichnet, dass** das Basiselement (1a) eine zylindrische Grundform besitzt.

3. Spann- oder Greifeinrichtung nach Anspruch 1 oder 2, **dadurch gekennzeichnet, dass** die Führungselemente (1b) blockförmig ausgebildet sind und insbesondere radial zu dem Basiselement (1a) ausgerichtet sind.

4. Spann- oder Greifeinrichtung nach einem der vorherigen Ansprüche, **dadurch gekennzeichnet, dass** das Basiselement (1a) und die Führungselemente an einer gemeinsamen Halteplatte (6) angeordnet sind, wobei die Führungselemente (1 b) insbesondere an der Halteplatte (6) lösbar fixiert sind und/oder wobei die Halteplatte (6) an dem Basiselement (1 a) ausgebildet ist.

5. Spann- oder Greifeinrichtung nach einem der vorherigen Ansprüche, **dadurch gekennzeichnet, dass** in dem Basiselement (1a) Antriebsmittel vorgesehen sind, die mit in die Führungsnuten (3) eingesetzten Spannbacken (4) gekoppelt oder koppelbar sind, um diese gemeinsam radial zu verstellen, wobei insbesondere die Antriebsmittel einen axial in dem Basiselement (1a) geführten Spannkolben (5) aufweisen und in die Führungsnuten (3) eingesetzte Spannbacken (4) mit dem Spannkolben (5) in der Weise gekoppelt oder koppelbar sind, dass eine Axialbewegung des Spannkolbens (5) in eine Radialbewegung der Spannbacken (4) umgesetzt wird.

6. Spann- oder Greifeinrichtung nach Anspruch 5, **dadurch gekennzeichnet, dass** in die Führungsnuten (3) des Grundkörpers (1) jeweils eine Grundbacke,(4a) einer Spannbacke (4) eingesetzt und radial verschiebbar geführt ist.

7. Spann- oder Greifeinrichtung nach Anspruch 6, **dadurch gekennzeichnet, dass** die Grundbacken (4a) in ihrer Längsrichtung unterteilt sind und ein radial innenliegendes Grundbackenelement, welches Kopplungsmittel zur Verbindung mit der Antriebseinrichtung trägt, und ein radial außenliegendes Grundbackenelement aufweist, wobei die beiden Grundbackenelemente unbeweglich, aber lösbar miteinander verbunden sind.

8. Spann- oder Greifeinrichtung nach Anspruch 7, **dadurch gekennzeichnet, dass** die Grundbackenelemente (7, 8) an ihren zueinander weisenden Endbereichen Verbindungsabschnitte (7a, 8a) aufweisen, die miteinander lösbar verbunden sind.

9. Spann- oder Greifeinrichtung nach Anspruch 8, **dadurch gekennzeichnet, dass** die Grundbackenelemente (7, 8) an ihren zueinander weisenden Endbereichen miteinander verspannt, insbesondere verschraubt sind.

10. Spann- oder Greifeinrichtung nach Anspruch 9, **dadurch gekennzeichnet, dass** sich die Verbindungsabschnitte (7a, 8a) in der Längsrichtung der Grundbacke (4a) überlappen.

11. Spann- oder Greifeinrichtung nach Anspruch 10, **dadurch gekennzeichnet, dass** die sich überlappenden Verbindungsabschnitte (7a, 8a) an ihren zueinander weisenden Seiten miteinander in Eingriff bringbare Positioniermittel, insbesondere Spitzverzahnungen (11) aufweisen, über welche die Grundbackenelemente in der Axialrichtung der Grundbacke (4a) zueinander positionierbar sind.

12. Spann- oder Greifeinrichtung nach Anspruch 10 oder 11, **dadurch gekennzeichnet, dass** in den Verbindungsabschnitten (7a, 8a) zueinander korrespondierende Durchgangsöffnungen (9), insbesondere Durchgangsbohrurigen vorgesehen sind, durch welche Befestigungsschrauben (10) gesteckt werden können, um die Grundbacken (4a) miteinander zu verschrauben und so miteinander zu verspannen.

13. Spann- oder Greifeinrichtung nach einem der vorherigen Ansprüche, **dadurch gekennzeichnet, dass** an dem Grundkörper (1) und/oder der Halteplatte (6) Befestigungsmittel zur Anbringung und/oder Positionierung an einem Maschinentisch (T), einem Arbeitstisch oder dergleichen vorgesehen sind.

## Claims

1. Chucking or gripping device with a base body (1) that defines a tensioning axis and several guide grooves (3) for the reception of clamping jaws that are provided in a front face of the base body (1) and are directed radially to the tensioning axis (X), wherein the base body (1) comprises a base element (1a), in which an inner guide groove section (3b) of the guide grooves (3) is formed, respectively, and several guiding elements (1 b), that are arranged on the outer side of the base element (1 a), in which an outer guide g roove section (3b) of the guide grooves (3) is formed, respectively, **characterized in that** the guide elements (1 b) are formed separately from the base element (1a) and in particular are arranged with a radial distance from the base element (1 a).

2. Chucking or gripping device according to claim 1, **characterized in that** the base element (1a) has a cylindrical basic shape.

3. Chucking or gripping device according to claim 1 or 2, **characterized in that** the guide elements (1 b) are block-shaped and in particular arranged radially to the base element (1 a).

4. Chucking or gripping device according to one of the preceding claims, **characterized in that** the base element (1a) and the guide elements are arranged on a common holding plate (6), wherein the guide elements (1 b) are in particular fixed to the guide plate (6) in a releasable way and/or wherein the holding plate (6) is formed on the base element (1 a).

5. Chucking or gripping device according to one of the preceding claims, **characterized in that** drive means are provided in the base element (1 a), that are coupled or can be coupled with clamping jaws (4) inserted into the guide grooves (3) for radially displacing the same together, wherein in particular the drive means comprise a tensioning piston (5) axially guided in the base element (1a) and clamping jaws (4) inserted into the guide grooves (3) are coupled or can be coupled with the tensioning piston (5) in such a way, that an axial movement of the tensioning piston (5) is converted into a radial movement of the clamping jaws.

6. Chucking or gripping device according to claim 5, **characterized in that** a base jaw (4a) of a clamping jaw (4) is inserted in each guide groove (3) of the base body (1) and radially displaceable therein.

7. Chucking or gripping device according to claim 6, **characterized in that** the base jaws (4a) are divided in their longitudinal direction radial and comprise an inner base jaw element, that carries coupling means for connecting with the drive means, and a radially outer base jaw element, wherein the two base jaw elements are connected with each other in an immovable but releasable manner.

8. Chucking or gripping device according to claim 7, **characterized in that** the base jaw elements (7, 8) have on their end portions facing to each other connection sections (7a, 8a), that are connected with each other in a releasable manner.

9. Chucking or gripping device according to claim 8, **characterized in that** the base jaw elements (7, 8) are tensed up with each other at their end portions facing to each other, in particular screwed together.

10. Chucking or gripping device according to claim 9, **characterized in that** the connecting sections (7a, 8a) overlap each other in the longitudinal direction of the base jaw (4a).

11. Chucking or gripping device according to claim 10, **characterized in that** the overlapping connecting sections (7a, 8a) are provided on their sides facing to each other with positioning means that are engageable with each other, in particular acute serrations (11), by means of which the base jaw elements can be positioned relative to each other in the axial direction of the base jaw (4a).

12. Chucking or gripping device according to claim 10 or 11, **characterized in that** through openings (9), in particular through bores corresponding to each other are provided in the connecting sections (7a, 8a), through which fixing screws (10) can be inserted in order to screw the base jaws (4a) together and thus tense them up.

13. Chucking or gripping device according to one of the preceding claims, **characterized in that** fixing means are provided on the base body (1) and/or the holding plate (6) for fixing and/or positioning on a machine table (T), a working table or the like.

## Revendications

1. Dispositif de serrage ou de préhension avec un corps de base, qui définit un axe de serrage et plusieurs rainures de guidage (3) pour le logement de mâchoires de serrage réalisées dans une surface frontale avant du corps de base (1) et qui s'étendent radialement par rapport à l'axe de serrage (X), le corps de base (1) comprenant un élément de base (1 a), dans lequel une portion de rainure de guidage interne (3b) des rainures de guidage (3) est formée respectivement, et plusieurs éléments de guidage (1b) disposés à l'extérieur de l'élément de base (1 a), dans lesquels une portion de rainure de guidage externe (3b) des rainures de guidage (3) est formée, respectivement, **caractérisé en ce que** les éléments de guidage (1b) sont formés séparément de l'élément de base (1 a) et sont disposés plus particulièrement avec une distance radiale par rapport à l'élément de base (1 a).

2. Dispositif de serrage ou de préhension selon la revendication 1, **caractérisé en ce que** l'élément de base (1a) présente une forme de base cylindrique.

3. Dispositif de serrage ou de préhension selon la revendication 1 ou 2, **caractérisé en ce que** les éléments de guidage (1b) sont conçus sous la forme de blocs et sont orientés plus particulièrement de manière radiale par rapport à l'élément de base (1a).

4. Dispositif de serrage ou de préhension selon l'une des revendications précédentes, **caractérisé en ce que** l'élément de base (1 a) et les éléments de guidage sont disposés sur une plaque de maintien commune (6), les éléments de guidage (1b) étant plus particulièrement fixés de manière amovible à la plaque de maintien (6) et/ou la plaque de maintien (6) étant réalisée sur l'élément de base (1 a).

5. Dispositif de serrage ou de préhension selon l'une des revendications précédentes, **caractérisé en ce que**, dans l'élément de base (1 a), se trouvent des moyens d'entraînement, qui sont couplés ou qui peuvent être couplés avec des mâchoires de serrage (4) insérées dans les rainures de guidage (3), afin de déplacer les mâchoires ensemble radialement, les moyens d'entraînement comprenant plus particulièrement un piston de serrage (5) guidé axialement dans l'élément de base (1 a) et étant couplés ou pouvant être couplés dans les mâchoires de serrage (4) insérées dans les rainures de guidage (3) avec le piston de serrage (5), de sorte à ce qu'un mouvement axial du piston de serrage (5) soit converti en un mouvement radial des mâchoires de serrage (4).

6. Dispositif de serrage ou de préhension selon la revendication 5, **caractérisé en ce que**, dans les rainures de guidage (3) du corps de base (1), une mâchoire de base (4a) d'une mâchoire de serrage (4) est insérée et est guidée de manière coulissante radialement.

7. Dispositif de serrage ou de préhension selon la revendication 6, **caractérisé en ce que** les mâchoires de base (4a) sont divisées dans leur direction longitudinale et un élément de mâchoire de base radial interne, qui supporte des moyens de couplage pour la liaison avec le dispositif d'entraînement, et un élément de mâchoire de base radial externe, les deux éléments de mâchoires de base étant reliés entre eux de manière immobile mais amovible.

8. Dispositif de serrage ou de préhension selon la revendication 7, **caractérisé en ce que** les éléments de mâchoires de base (7, 8) comprennent, au niveau de leurs parties d'extrémité orientées les unes vers les autres, des portions de raccordement (7a, 8a) qui sont reliées entre elles de manière amovible.

9. Dispositif de serrage ou de préhension selon la revendication 8, **caractérisé en ce que** les éléments de mâchoires de base (7, 8) sont serrés, plus particulièrement vissés, entre eux au niveau de leurs parties d'extrémité orientées les unes vers les autres.

10. Dispositif de serrage ou de préhension selon la revendication 9, **caractérisé en ce que** les portions de raccordement (7a, 8a) se superposent dans la direction longitudinale de la mâchoire de base (4a).

11. Dispositif de serrage ou de préhension selon la revendication 10, **caractérisé en ce que** les portions de raccordement (7a, 8a) superposées comprennent, au niveau de leurs côtés orientés entre eux, des moyens de positionnement pouvant être emboîtés entre eux, plus particulièrement des dentures (11), par l'intermédiaire desquelles les éléments de mâchoires de base peuvent être positionnés entre eux dans la direction axiale de la mâchoire de base (4a).

12. Dispositif de serrage ou de préhension selon la revendication 10 ou 11, **caractérisé en ce que**, dans les ouvertures de passage (9) correspondant entre elles dans les portions de raccordement (7a, 8a), sont prévus plus particulièrement des alésages de passage dans lesquels des vis de fixation (10) peuvent être insérées pour visser les mâchoires de base (4a) entre elles et ainsi les serrer entre elles.

13. Dispositif de serrage ou de préhension selon l'une des revendications précédentes, **caractérisé en ce que**, sur le corps de base (1) et/ou la plaque de maintien (6) sont prévus des moyens de fixation pour le montage et/ou le positionnement sur une table de machine (T), une table de travail ou analogue.
